# EUROPÄISCHE PATENTANMELDUNG

(11) **EP 3 648 300 A1**
(43) Veröffentlichungstag der Anmeldung: **06.05.2020**
(21) Anmeldenummer: 18203714.3
(22) Anmeldetag: 31.10.2018
(51) Int. Cl.: H02J 50/12

(54) **RESONANTER SCHWINGKREIS ZUM ÜBERTRAGEN VON ELEKTRISCHER ENERGIE**

(71) Anmelder: Hilti Aktiengesellschaft, 9494 Schaan (LI)
(72) Erfinder: Zenkner, Heinz, 50220 Chiang Mai (TH)

(57) **Zusammenfassung**

Vorrichtung zum Senden von elektrischer Energie an wenigstens einen elektrischen Verbraucher, beispielsweise einen Akkumulator, enthaltend wenigstens eine Sendereinrichtung zum Senden einer elektrischen Energie mit wenigstens einer ersten Spule und wenigstens einem ersten Kondensator zum Erzeugen eines resonanten Schwingkreises an der Sendereinrichtung; wenigstens eine Empfängereinrichtung zum Empfangen der von der Sendereinrichtung gesendeten Energie mit wenigstens einer zweiten Spule und wenigstens einem zweiten Kondensator zum Erzeugen eines resonanten Schwingkreises an der Empfängereinrichtung, wobei die Empfängereinrichtung mit dem Verbraucher zur Bildung einer elektrischen Verbindung verbindbar ist; einen Leistungsverstärker; einen Übertrager zum Anpassen der Impedanz zwischen dem resonanten Schwingkreis an der Empfängereinrichtung und dem Verbraucher sowie eine elektrische Energiequelle, insbesondere eine Wechselspannungsquelle, zur Versorgung des resonanten Schwingkreises an der Sendereinrichtung mit elektrischer Energie.

Die Sendereinrichtung und Empfängereinrichtung bilden gemeinsam einen resonanten Schwingkreis zur Übertragung der elektrischen Energie von der Sendereinrichtung zu der Empfängereinrichtung, sodass bei der Empfängereinrichtung die von der Sendereinrichtung zur Verfügung gestellte elektrische Energie dem Verbraucher zugeführt werden kann.

## Beschreibung

Die vorliegende Erfindung betrifft eine Vorrichtung zum Senden von elektrischer Energie an wenigstens einen elektrischen Verbraucher, beispielsweise einen Akkumulator, enthaltend wenigstens eine Sendereinrichtung zum Senden einer elektrischen Energie mit wenigstens einer ersten Spule und wenigstens einem ersten Kondensator zum Erzeugen eines resonanten Schwingkreises an der Sendereinrichtung, wenigstens eine Empfängereinrichtung zum Empfangen der von der Sendereinrichtung gesendeten Energie mit wenigstens einer zweiten Spule und wenigstens einem zweiten Kondensator zum Erzeugen eines resonanten Schwingkreises an der Empfängereinrichtung, wobei die Empfängereinrichtung mit dem Verbraucher zur Bildung einer elektrischen Verbindung verbindbar ist, einen Leistungsverstärker, einen Übertrager zum Anpassen der Impedanz zwischen dem resonanten Schwingkreis an der Empfängereinrichtung und dem Verbraucher sowie eine elektrische Energiequelle, insbesondere eine Wechselspannungsquelle, zur Versorgung des resonanten Schwingkreises an der Sendereinrichtung mit elektrischer Energie.
Die drahtlose Übertragung einer elektrischen Energie von einem Sender zu einem Empfänger, beispielsweise in Form einer induktiven Übertragung, ist bereits seit längerem bekannt. Problematisch an Vorrichtungen gemäß dem Stand der Technik zur drahtlosen Energieübertragung ist jedoch der relativ hohe Energieverlust bei der Übertragung, sodass keine hohe oder zumindest keine ausreichende Effizienz bei der Übertragung erreicht werden kann.

Die Aufgabe der vorliegenden Erfindung ist es daher, eine Vorrichtung bereitzustellen, mit der eine drahtlose Energieübertragung mit hoher Effizienz erreicht werden kann.
Die Aufgabe wird durch die Vorrichtung zum Senden einer elektrischen Energie gemäß dem unabhängigen Anspruch 1 gelöst. Weitere vorteilhafte Ausführungen der erfindungsgemäßen Vorrichtung sind in den Unteransprüchen 2 bis 8 beschrieben.
Die Aufgabe wird dabei gelöst durch eine Vorrichtung zum Senden von elektrischer Energie an wenigstens einen elektrischen Verbraucher, beispielsweise einen Akkumulator, enthaltend wenigstens eine Sendereinrichtung zum Senden einer elektrischen Energie mit wenigstens einer ersten Spule und wenigstens einem ersten Kondensator zum Erzeugen eines resonanten Schwingkreises an der Sendereinrichtung, wenigstens eine Empfängereinrichtung zum Empfangen der von der Sendereinrichtung gesendeten Energie mit wenigstens einer zweiten Spule und wenigstens einem zweiten Kondensator zum Erzeugen eines resonanten Schwingkreises an der Empfängereinrichtung, wobei die Empfängereinrichtung mit dem Verbraucher zur Bildung einer elektrischen Verbindung verbindbar ist, einen Leistungsverstärker, einen Übertrager zum Anpassen der Impedanz zwischen dem resonanten Schwingkreis an der Empfängereinrichtung und dem Verbraucher sowie eine elektrische Energiequelle, insbesondere eine Wechselspannungsquelle, zur Versorgung des resonanten Schwingkreises an der Sendereinrichtung mit elektrischer Energie.
Erfindungsgemäß ist vorgesehen, dass die Sendereinrichtung und Empfängereinrichtung gemeinsam einen serienresonanten Schwingkreis bilden zur Übertragung der elektrischen Energie von der Sendereinrichtung zu der Empfängereinrichtung, sodass bei der Empfängereinrichtung die von der Sendereinrichtung zur Verfügung gestellte elektrische Energie dem Verbraucher zugeführt werden kann. Hierdurch kann auf effiziente Art elektrische Energie übertragen werden.
Der Verbraucher kann dabei in Form einer Last, eines elektrischen Widerstands, eines Speichers, eines Energiespeichers, eines Wandlers oder in Form anderer Komponenten, die die zugeführte Energie für ihre Funktion nutzbar machen können, ausgestaltet sein.
Der Erfindung liegt das Prinzip der induktiven Kopplung mit zwei resonanten hoch-effizienten Resonanzschwingkreisen zu Grunde, wobei ein erster Schwingkreis mit entsprechend hochfrequenter Energie so gespeist wird, dass die hochfrequente Energie zu dem zweiten Schwingkreis übertragen wird, um diese einem elektrischen Verbraucher zur Verfügung zu stellen. Da der erste Schwingkreis hochresonant ist, verringert sich die im Schwingkreis befindliche elektrische Energie nur relativ langsam über viele Schwingzyklen. Die elektrische Energie wird jedoch durch den zweiten Schwingkreis aufgenommen, wenn die beiden Schwingkreise nicht eine vorbestimmte Distanz zueinander überschreiten.
Der Übertrager kann auch als Anpassungstransformator bezeichnet werden.
Der resonante Schwingkreis kann auch als Resonanzkreis bezeichnet werden.
Der Leistungsverstärker dient als Taktgeber für die Frequenz des resonanten Schwingkreises an der Sendereinrichtung. Der Leistungsverstärker ist dabei so ausgestaltet, dass entweder eine niederimpedante oder hochimpedante Energiequelle für den resonanten Schwingkreis an der Sendereinrichtung erzeugt wird.
Gemäß einer weiteren vorteilhaften Ausführungsform der vorliegenden Erfindung kann vorgesehen sein, dass die erste Spule und der erste Kondensator der Sendereinrichtung parallel zueinander geschaltet sind zur Erzeugung eines parallelresonanten Schwingkreises an der Sendereinrichtung. Es ist dabei möglich, dass die zweite Spule und der zweite Kondensator der Empfängereinrichtung in Serie zueinander angeordnet sind, um einen serienresonanten Schwingkreis an der Empfängereinrichtung zu erzeugen. Hierdurch kann an der Sendereinrichtung ein hoher elektrischer Spannungswert und ein niedriger elektrischer Stromwert erzeugt werden. Diese Anordnung ist insbesondere bei einer hochimpedanten Energiequelle zur Versorgung der Sendereinrichtung vorteilhaft.

Entsprechend einer weiteren vorteilhaften Ausführungsform kann es möglich sein, dass die zweite Spule und der zweite Kondensator der Empfängereinrichtung parallel zueinander geschaltet sind zur Erzeugung eines parallelresonanten Schwingkreises an der Empfängereinrichtung. Der parallelresonante Schwingkreis an der Empfängereinrichtung weist dabei eine hohe Impedanz auf. Es ist dabei möglich, dass die erste Spule und der erste Kondensator der Sendereinrichtung in Serie zueinander angeordnet sind, um einen serienresonanten Schwingkreis an der Sendereinrichtung zu erzeugen. Hierdurch kann ein größeres Verhältnis von einer ersten Wicklung zu einer zweiten Wicklung an dem Übertrager erzeugt werden. Außerdem kann ein höherer Spannungswert und gleichzeitig ein niedriger Stromwert an der Empfängereinrichtung erzeugt und dadurch ein Energieverlust an der zweiten Spule der Empfängereinrichtung verringert werden.

Gemäß einer weiteren Ausführungsform kann es vorteilhaft sein, dass die erste Spule einen Ferrit-Kern enthält, der wenigstens teilweise aus dem Material 4F1 besteht. Hierdurch kann der Verlust an elektrischer Leistung an der ersten Spule auf ein Minimum reduziert werden. Darüber hinaus kann eine Wärmeentwicklung in der ersten Spule während der Verwendung um ca. 20% erreicht werden.

Entsprechend einer weiteren vorteilhaften Ausführungsform kann es möglich sein, dass die zweite Spule einen Ferrit-Kern enthält, der wenigstens teilweise aus dem Material 4C65 besteht. Hierdurch kann der Verlust an elektrischer Leistung an der zweiten Spule auf ein Minimum reduziert werden. Des Weiteren kann eine Wärmeentwicklung in der ersten Spule während der Verwendung um ca. 30% erreicht werden.

Gemäß einer weiteren Ausführungsform kann es vorteilhaft sein, dass sowohl die erste als auch zweite Spule einen Ferrit-Kern enthält, welcher einen spezifischen Widerstand von 10⁵ bis 10⁶ Ωm sowie eine magnetische Permeabilität von 50 bis 500, insbesondere 125 hat. Hierdurch kann auf effiziente Art und Weise der resonante Schwingkreis an der Empfängereinrichtung erzeugt werden, sodass eine hohe Energiemenge von der Sendereinrichtung zu der Empfängereinrichtung gesendet werden kann.

Es ist darüber hinaus auch möglich, dass der Ferrit-Kern wenigstens teilweise Nickel-Zink-Legierung (NiZn) enthält. Hierdurch kann auf effiziente Art und Weise der resonante Schwingkreis an der Empfängereinrichtung erzeugt werden, sodass eine hohe Energiemenge von der Sendereinrichtung zu der Empfängereinrichtung gesendet werden kann.
Des Weiteren kann es entsprechend einer weiteren Ausführungsform auch möglich sein, dass der Ferrit-Kern U-förmig ausgestaltet ist und eine Querschnittsfläche von 5,65 cm² aufweist, sodass während der Übertragung der elektrischen Energie von der Sendereinrichtung zu der Empfängereinrichtung eine Leistungsdichte von 35 W/cm² bei einer Eingangsleistung von 200W erreichbar ist. Hierdurch kann auf effiziente Art und Weise der resonante Schwingkreis an der Empfängereinrichtung erzeugt werden, sodass eine hohe Energiemenge von der Sendereinrichtung zu der Empfängereinrichtung gesendet werden kann.
Gemäß einer weiteren Ausführungsform kann es vorteilhaft sein, dass die Frequenz des resonanten Schwingkreises an der Sendereinrichtung zwischen 2 und 30 MHz, insbesondere zwischen 6,765 und 6,795 MHz, beispielsweise bei 6,78 MHz, liegt. Hierdurch kann auf effiziente Art und Weise der resonante Schwingkreis an der Empfängereinrichtung erzeugt werden, sodass eine hohe Energiemenge von der Sendereinrichtung zu der Empfängereinrichtung gesendet werden kann.
Zur Abstimmung der Resonanzfrequenz in dem resonanten Schwingkreis an der Sendereinrichtung und/oder in dem resonanten Schwingkreis an der Empfängereinrichtung kann es entsprechend einer weiteren Ausführungsform möglich sein, dass in der Sendereinrichtung und/oder in der Empfängereinrichtung ein variabler Kondensator, beispielsweise ein TrimmerKondensator, enthalten ist. Alternativ kann in der Sendereinrichtung und/oder in der Empfängereinrichtung anstelle eines Trimmer-Kondensators auch eine adäquat wirkende elektronische Schaltung zur Abstimmung der Resonanzfrequenz enthalten sein.
Entsprechend einer weiteren Ausführungsform kann es vorteilhaft sein, dass die Empfängereinrichtung einen Übertrager enthält zur Erhöhung des Wirkungsgrads durch Impedanzanpassung sowie zur Entkopplung zwischen dem resonanten Schwingkreis an der Empfängereinrichtung und dem Verbraucher. Alternativ kann der Übertrager auch als integrierter Übertrager ausgestaltet sein.

Entsprechend einer weiteren vorteilhaften Ausführungsform der vorliegenden Erfindung kann der Übertrager als zusätzliche Wicklung mit auf dem resonanten Schwingkreis an der Empfängereinrichtung integriert sein.
Es ist gemäß einer weiteren vorteilhaften Ausführungsform der vorliegenden Erfindung auch möglich, dass der Ferrit-Kern der ersten Spule und/oder zweiten Spule in unterschiedlichsten Formen ausgestaltet ist. Durch die unterschiedlichen Formen des Ferrit-Kerns kann der Einbau der erfindungsgemäßen Vorrichtung in einem Gehäuse auf bestimmte geometrische Vorgaben und insbesondere auf einen möglichen Platzmangel angepasst werden.

In den Figuren sind gleiche und gleichartige Komponenten mit gleichen Bezugszeichen beziffert.

Es zeigen:
- Fig. 1: einen schematischen Schaltplan gemäß einer ersten erfindungsgemäßen Ausführungsform, wobei eine Sendereinrichtung einen Serienschwingkreis und eine Empfängereinrichtung einen Serienschwingkreis enthält, wobei ein Übertrager mit einer Mittelabzapfung und ein Gleichrichter als Zweipulsmittelpunktsgleichrichter geschaltet ist;
- Fig. 2: einen schematischen Schaltplan gemäß einer zweiten erfindungsgemäßen Ausführungsform, wobei die Sendereinrichtung einen Parallelschwingkreis und die Empfängereinrichtung einen Serienschwingkreis enthält, wobei ein Übertrager mit einer Mittelabzapfung und ein Gleichrichter als Zweipulsmittelpunktsgleichrichter geschaltet ist;
- Fig. 3: einen schematischen Schaltplan gemäß einer dritten erfindungsgemäßen Ausführungsform, wobei die Sendereinrichtung einen Serienschwingkreis und die Empfängereinrichtung einen Parallelschwingkreis enthält, wobei ein Übertrager mit einer Mittelabzapfung und ein Gleichrichter als Zweipulsmittelpunktsgleichrichter geschaltet ist;
- Fig. 4: einen schematischen Schaltplan gemäß einer vierten erfindungsgemäßen Ausführungsform, wobei die Sendereinrichtung einen Parallelschwingkreis und die Empfängereinrichtung einen Parallelschwingkreis enthält, wobei ein Übertrager mit einer Mittelabzapfung und ein Gleichrichter als Zweipulsmittelpunktsgleichrichter geschaltet ist;
- Fig. 5: einen schematischen Schaltplan gemäß einer fünften erfindungsgemäßen Ausführungsform, wobei die Sendereinrichtung einen Serienschwingkreis und die Empfängereinrichtung einen Serienschwingkreis enthält, wobei in der Empfängereinrichtung ein Übertrager mit einem Brückengleichrichter und ohne Mittelabzapfung vorgesehen ist;
- Fig. 6: einen schematischen Schaltplan gemäß einer sechsten erfindungsgemäßen Ausführungsform, wobei ein Brückengleichrichter enthalten ist und der Übertrager in einer Spule der Empfängereinrichtung enthalten ist;
- Fig. 7: einen schematischen Schaltplan gemäß einer siebten erfindungsgemäßen Ausführungsform, wobei ein Zweipulsmittelpunktsgleichrichter und ein integrierter Übertrager enthalten ist;
- Fig. 8: einen schematischen Schaltplan gemäß einer achten erfindungsgemäßen Ausführungsform, wobei eine Last in Form eines elektrischen Widerstands enthalten ist;
- Fig. 9: einen Ferrit-Kern der ersten und/oder zweiten Spule in einer ersten Ausgestaltungsform;
- Fig. 10: den Ferrit-Kern der ersten und/oder zweiten Spule in einer zweiten Ausgestaltungsform;
- Fig. 11: den Ferrit-Kern der ersten und/oder zweiten Spule in einer dritten Ausgestaltungsform;
- Fig. 12: den Ferrit-Kern der ersten und/oder zweiten Spule in einer vierten Ausgestaltungsform;
- Fig. 13: den Ferrit-Kern der ersten und/oder zweiten Spule in einer fünften Ausgestaltungsform;
- Fig. 14: den Ferrit-Kern der ersten und/oder zweiten Spule in einer sechsten Ausgestaltungsform mit einer ersten Wicklungsanordnung; und
- Fig. 15: den Ferrit-Kern der ersten und/oder zweiten Spule in der sechsten Ausgestaltungsform mit einer zweiten Wicklungsanordnung.

### Ausführungsbeispiele:

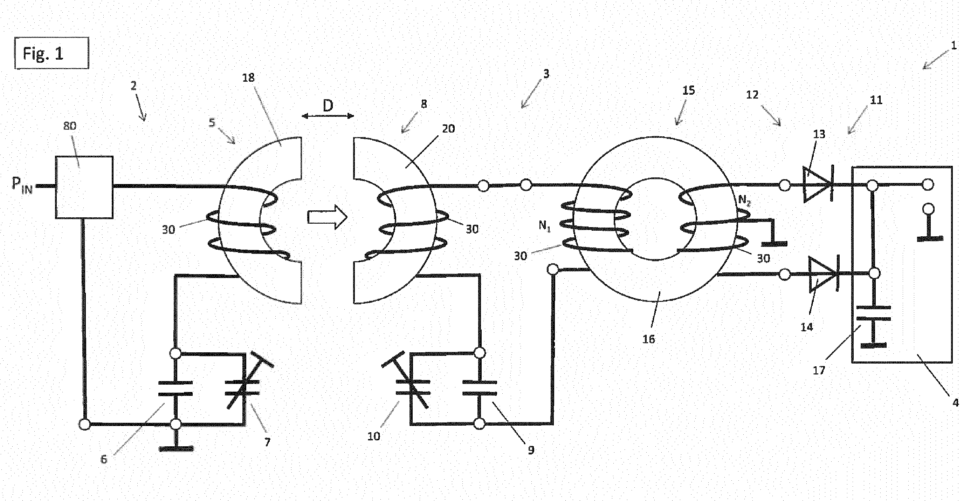

Figur 1 bis 8 zeigen schematische Schaltpläne der erfindungsgemäßen Vorrichtung 1 zum Senden einer elektrischen Energie von einer Sendereinrichtung 2 an eine Empfängereinrichtung 3 gemäß unterschiedlicher Ausführungsbeispielen.

Die erfindungsgemäße Vorrichtung 1 enthält dabei im Wesentlichen eine Sendereinrichtung 2 sowie eine Empfängereinrichtung 3.

Die Sendereinrichtung 2 dient zum Aufnehmen einer elektrischen Energie sowie zum Senden bzw. Übertragen einer elektrischen Energie an die Empfängereinrichtung 3. Zur Versorgung mit elektrische Energie ist die Sendereinrichtung 2 mit einer elektrischen Energiequelle verbunden. Die Versorgung mit elektrischer Energie erfolgt in Form einer Wechselstromquelle. Die Energiequelle ist in den Figuren nicht dargestellt.

Die Empfängereinrichtung 3 dient wiederum zum Empfangen der gesendeten elektrischen Energie, Ver- bzw. Bearbeiten sowie zum Weiterleiten an einen elektrischen Verbraucher 4. Der elektrische Verbraucher 4 kann dabei beispielsweise als Akkumulator mit einem integrierten Gleichrichter ausgestaltet sein. Der Gleichrichter dient zur Umwandlung der an der Empfängereinrichtung 3 erzeugten Wechselspannung in eine Gleichspannung.

Es ist dabei jedoch auch möglich, dass der Verbraucher 4 lediglich als elektrischer Widerstand ausgestaltet ist. Der als Akkumulator ausgestaltete elektrische Verbraucher 4 ist wahlweise und wiederlösbar mit der Empfängereinrichtung 3 verbindbar, um mit elektrischen Strom versorgt zu werden bzw. den Akkumulator mit elektrischer Energie zu laden. Gemäß dieser Ausgestaltungsform dient die erfindungsgemäße Vorrichtung 1 als Ladevorrichtung für den als Akkumulator ausgestalteten Verbraucher 4.

Figur 1 zeigt einen schematischen Schaltplan gemäß einer ersten Ausführungsform der erfindungsgemäßen Vorrichtung 1. Wie vorstehend bereits erwähnt enthält die Vorrichtung 1 dabei im Wesentlichen die Sendereinrichtung 2 und die Empfängereinrichtung 3.

Die Sendereinrichtung 2 enthält eine erste Spule 5 und einen ersten Kondensator 6. Die erste Spule 5 und der erste Kondensator 6 sind dabei in Serie so miteinander verbunden, dass ein erster resonanter Schwingkreis gebildet wird. Bei dem ersten resonanten Schwingkreis handelt es sich dementsprechend um einen serienresonanten Schwingkreis. Dieser erste resonante Schwingkreis wird auch als Sender-Resonanzkreis bezeichnet. Darüber hinaus kann die Sendereinrichtung 2 einen ersten Trimmkondensator 7 enthalten, welcher zur Einstellung der Kapazität bzw. der Resonanzfrequenz in der Sendereinrichtung 2 dient. Der erste Trimmkondensator 7 kann auch als variabler Kondensator bezeichnet werden.

Die Empfängereinrichtung 3 gemäß der ersten Ausführungsform der erfindungsgemäßen Vorrichtung 1 enthält eine zweite Spule 8 und einen zweiten Kondensator 9. Die zweite Spule 8 und der zweite Kondensator 9 sind dabei in Serie so miteinander verbunden, dass ein zweiter resonanter Schwingkreis gebildet wird. Bei dem zweiten resonanten Schwingkreis handelt es sich dementsprechend um einen serienresonanten Schwingkreis. Dieser zweite resonante Schwingkreis wird auch als Empfänger-Resonanzkreis bezeichnet. Darüber hinaus kann die Empfängereinrichtung 3 einen zweiten Trimmkondensator 10 enthalten, welcher zur Einstellung der Kapazität bzw. der Resonanzfrequenz in der Empfängereinrichtung 3 dient. Der zweite Trimmkondensator 10 kann auch als variabler Kondensator bezeichnet werden.

Die Vorrichtung 1 gemäß der ersten Ausführungsform enthält des Weiteren einen Gleichrichter 11 zur Umwandlung der an der Empfängereinrichtung 3 erzeugten Wechselspannung in eine Gleichspannung. Der Gleichrichter 11 ist gemäß der ersten Ausführungsform als Zweipulsmittelpunkts-Gleichrichter ausgestaltet. Der Gleichrichter 11 enthält eine Zweipuls-Mittelpunktschaltung 12 enthält eine erste Diode 13 und eine zweite Diode 14. Die Zweipuls-Mittelpunktschaltung 12 dient zum Erzeugen eines höheren Wirkungsgrads. Anstelle des Gleichrichters 11 mit der Zweipuls-Mittelpunktschaltung 12 können gemäß einer alternativen Ausführungsform auch lediglich ein Gleichrichter 11 zwei Dioden verwendet werden. Alternativ kann auch jede andere geeignete Art von Gleichrichter verwendet werden.

Des Weiteren enthält die erste Ausführungsform der erfindungsgemäßen Vorrichtung 1 einen Übertrager 15, der mit der Empfängereinrichtung 3 in Verbindung steht. Der Übertrager 15 dient zur Anpassung der elektrischen Spannung und enthält gemäß der in den Figuren gezeigten Ausführungsformen im Wesentlichen einen kreisrunden Ferrit-Kern 16. An dem Ferrit-Kern 16 des Übertragers 15 ist an der einen Seite eine erste Wicklung N₁ und an einer zweiten Seite eine zweite Wicklung N₂ positioniert. Die erste Wicklung N₁ weist dabei eine erste Anzahl an Drahtwicklung und die zweite Wicklung N₂ weist eine zweite Anzahl an Drahtwicklung auf. Die erste Wicklung N₁ enthält eine höhere Anzahl an Umwicklung als die zweite Wicklung N₂.

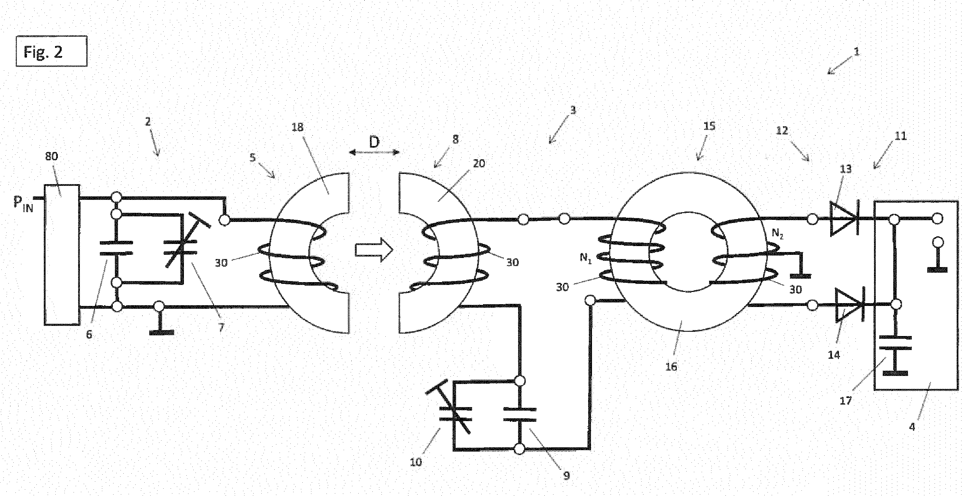

In Figur 2 ist ein schematisches Schaltbild der erfindungsgemäßen Vorrichtung 1 gemäß einer zweiten Ausführungsform dargestellt. Die Vorrichtung 1 gemäß der zweiten Ausführungsform entspricht dabei im Wesentlichen der Vorrichtung 1 gemäß der ersten Ausführungsform in Figur 1. Die Vorrichtung 1 gemäß der zweiten Ausführungsform unterscheidet sich von der Vorrichtung 1 gemäß der ersten Ausführungsform dadurch, dass die erste Spule 5 und der erste Kondensator 6 der Sendereinrichtung 2 parallel miteinander verbunden, sodass ein parallelresonanter Schwingkreis erzeugt wird. Die Empfängereinrichtung 3 gemäß der zweiten Ausführungsform der erfindungsgemäßen Vorrichtung 1 enthält außerdem eine zweite Spule 8 und einen zweiten Kondensator 9, welche in Serie (d.h. seriell) miteinander verbunden, sodass ein serienresonanter Schwingkreis gebildet wird.

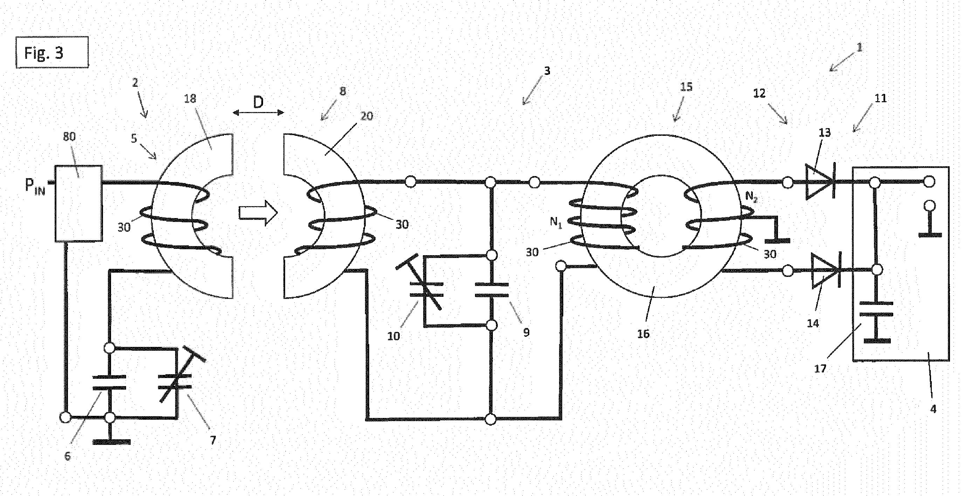

In Figur 3 ist ein schematisches Schaltbild der erfindungsgemäßen Vorrichtung 1 gemäß einer dritten Ausführungsform gezeigt. Die Vorrichtung 1 gemäß der dritten Ausführungsform entspricht dabei im Wesentlichen der Vorrichtung 1 gemäß der ersten oder zweiten Ausführungsform in Figur 1 bzw. Figur 2. Die Vorrichtung 1 gemäß der dritten Ausführungsform unterscheidet sich von der Vorrichtung 1 gemäß der ersten oder zweiten Ausführungsform dadurch, dass die erste Spule 5 und der erste Kondensator 6 der Sendereinrichtung 2 in Serie (d.h. seriell) miteinander verbunden, sodass ein serienresonanter Schwingkreis erzeugt wird. Die Empfängereinrichtung 3 gemäß der dritten Ausführungsform der erfindungsgemäßen Vorrichtung 1 enthält außerdem eine zweite Spule 8 und einen zweiten Kondensator 9, welche parallel miteinander verbunden sind, sodass ein parallelresonanter Schwingkreis gebildet wird.

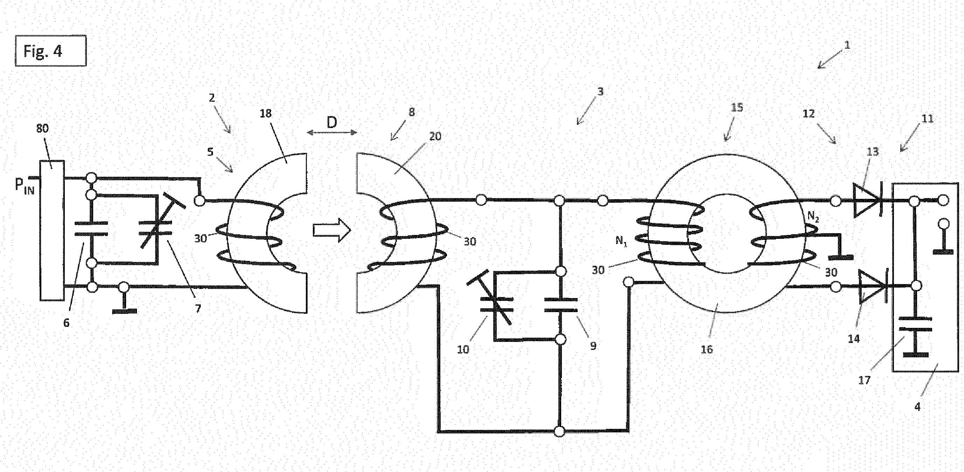

In Figur 4 ist ein schematisches Schaltbild der erfindungsgemäßen Vorrichtung 1 gemäß einer vierten Ausführungsform dargestellt. Die Vorrichtung 1 gemäß der vierten Ausführungsform entspricht dabei im Wesentlichen der Vorrichtung 1 gemäß der ersten, zweiten oder dritten Ausführungsform, welche entsprechend in den Figur 1 bis 3 dargestellt sind. Die Vorrichtung 1 gemäß der vierten Ausführungsform unterscheidet sich von der Vorrichtung 1 gemäß der ersten, zweiten oder dritten Ausführungsform dadurch, dass die erste Spule 5 und der erste Kondensator 6 der Sendereinrichtung 2 parallel miteinander verbunden, sodass ein parallelresonanter Schwingkreis erzeugt wird. Die Empfängereinrichtung 3 gemäß der zweiten Ausführungsform der erfindungsgemäßen Vorrichtung 1 enthält wiederum eine zweite Spule 8 und einen zweiten Kondensator 9, welche parallel miteinander verbunden, sodass ein parallelresonanter Schwingkreis gebildet wird.

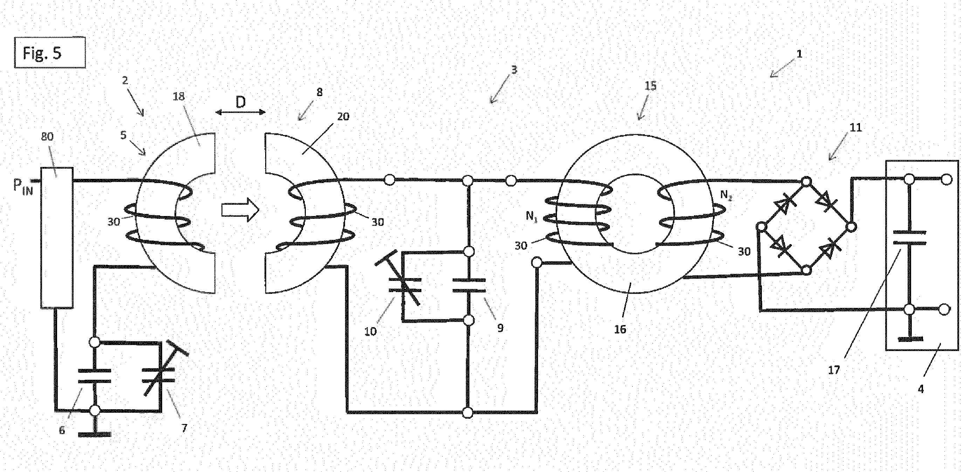

In Figur 5 ist ein schematisches Schaltbild der erfindungsgemäßen Vorrichtung 1 gemäß einer fünften Ausführungsform dargestellt. Die Vorrichtung 1 gemäß der fünften Ausführungsform entspricht dabei im Wesentlichen der Vorrichtung 1 gemäß der dritten Ausführungsform, welche in Figur 3 dargestellt ist. Im Gegensatz zu der Vorrichtung 1 gemäß der dritten Ausführungsform ist der Gleichrichter 11 an der Empfängereinrichtung 3 gemäß der fünften Ausführungsform in Form eines Brückengleichrichters anstelle eines Zweipulsmittelpunkts-Gleichrichters ausgestaltet. An dem Übertrager 15 ist hierbei keine Mittelabzapfung enthalten.

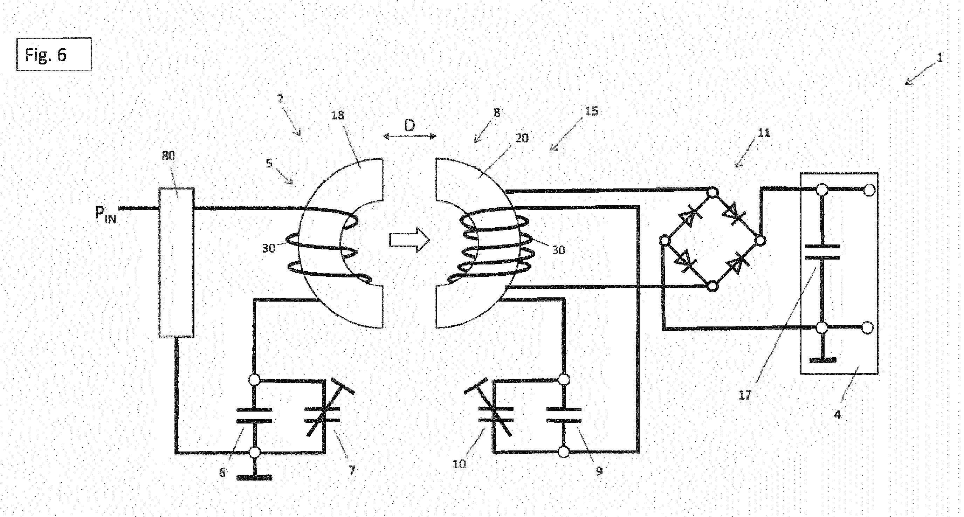

In Figur 6 ist ein schematisches Schaltbild der erfindungsgemäßen Vorrichtung 1 gemäß einer sechsten Ausführungsform dargestellt. Die Vorrichtung 1 gemäß der sechsten Ausführungsform entspricht dabei im Wesentlichen der Vorrichtung 1 gemäß der ersten Ausführungsform, welche in Figur 1 dargestellt ist. Im Gegensatz zu der Vorrichtung 1 gemäß der ersten Ausführungsform enthält die Empfängereinrichtung 3 in der Vorrichtung 1 gemäß der sechsten Ausführungsform einen Übertrager 15 ohne separaten bzw. eigenen Ferrit-Kern. Wie der Figur 6 zu entnehmen ist, dient der Ferrit-Kern 20 der zweiten Spule 8 der Empfängereinrichtung 3 als Ferrit-Kern des Übertragers 15. Durch den Verzicht auf einen separaten Ferrit-Kern für den Übertrager 15 kann Platz sowie Kosten eingespart werden. Darüber hinaus ist der Gleichrichter 11 der Vorrichtung 1 der sechsten Ausführungsform in Form eines Brückengleichrichters ausgestaltet.

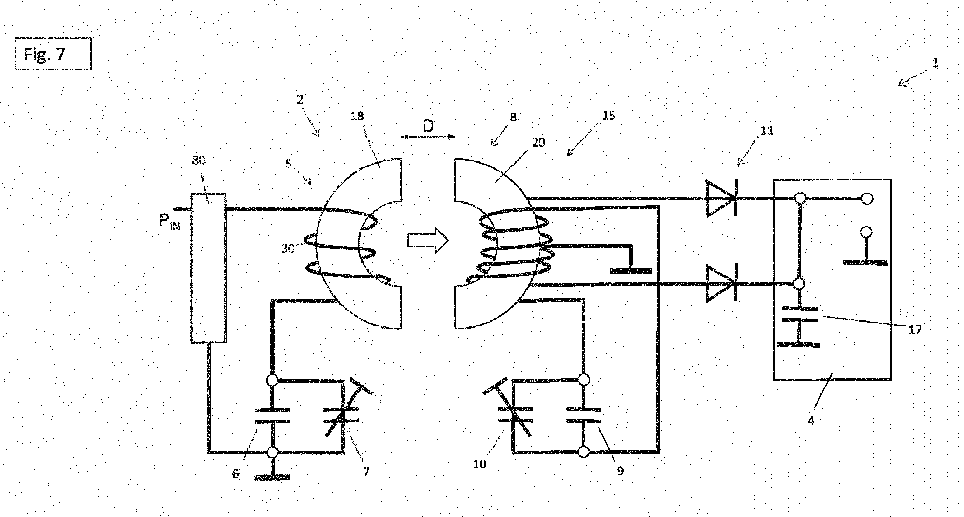

In Figur 7 ist ein schematisches Schaltbild der erfindungsgemäßen Vorrichtung 1 gemäß einer siebten Ausführungsform dargestellt. Die Vorrichtung 1 gemäß der siebten Ausführungsform entspricht dabei im Wesentlichen der Vorrichtung 1 gemäß der sechsten Ausführungsform, welche in Figur 6 dargestellt ist. Im Gegensatz zu der Vorrichtung 1 gemäß der sechsten Ausführungsform ist der Gleichrichter 11 der Empfängereinrichtung 3 gemäß der siebten Ausführungsform anstelle eines Brückengleichrichters als ein Zweipulsmittelpunkts-Gleichrichter ausgestaltet.

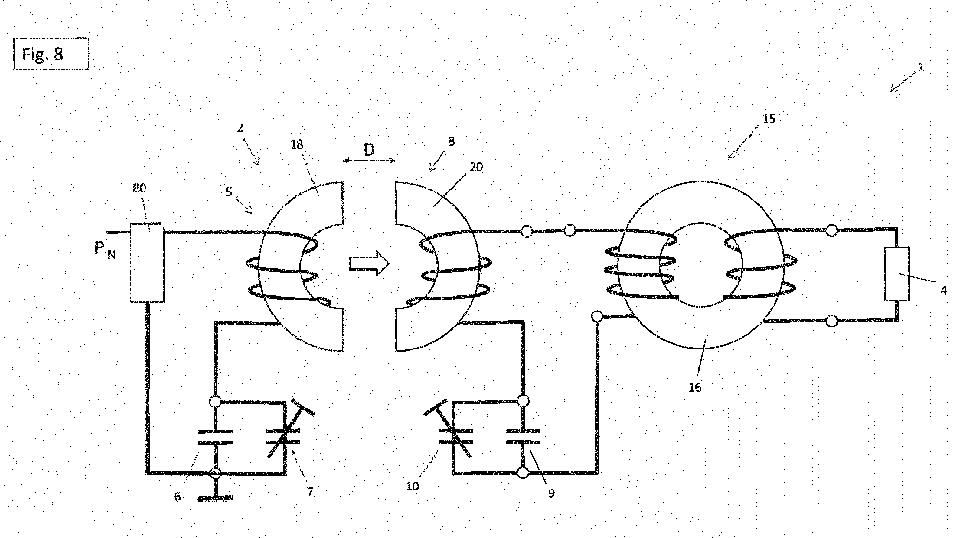

In Figur 8 ist ein schematisches Schaltbild der erfindungsgemäßen Vorrichtung 1 gemäß einer achten Ausführungsform dargestellt. Die Vorrichtung 1 gemäß der achten Ausführungsform entspricht dabei im Wesentlichen der Vorrichtung 1 gemäß der ersten Ausführungsform, welche in Figur 1 dargestellt ist. Im Gegensatz zu der Vorrichtung 1 gemäß der ersten Ausführungsform ist in der Vorrichtung 1 gemäß der achten Ausführungsform an die Empfängereinrichtung 3 anstelle eines Gleichrichters 11 der Verbraucher 4 angeschlossen. Der Verbraucher 4 ist in der Vorrichtung 1 gemäß der achten Ausführungsform in Form eines elektrischen Widerstands ausgestaltet.

Bei der Vorrichtung 1 gemäß der ersten bis achten Ausführungsform enthält die Sendereinrichtung 2 einen ersten Trimmkondensator 7 und die Empfängereinrichtung 3 einen zweiten Trimmkondensator 10. Es ist jedoch auch möglich, dass nur die Sendereinrichtung 2 einen ersten Trimmkondensator 7 und die Empfängereinrichtung 3 keinen Trimmkondensator enthält. Darüber hinaus ist es auch möglich, dass lediglich die Empfängereinrichtung 3 einen Trimmkondensator 10 und die Sendereinrichtung 2 keinen Trimmkondensator enthält. Außerdem ist es auch möglich, dass weder die Sendereinrichtung 2 noch die Empfängereinrichtung 3 einen Trimmkondensator enthalten.

Des Weiteren ist es möglich, dass der Verbraucher 4 gemäß der ersten bis siebten Ausführungsform einen Kondensator 17 enthält. Der Kondensator 17 kann dabei als ein keramischer Kondensator oder als ein Elektrolytkondensator (ELKO) ausgestaltet sein.

Es ist jedoch auch gemäß einer alternativen Ausführungsform möglich, dass der Verbraucher 4 zwei Kondensatoren enthält. Hierbei ist einer der beiden Kondensatoren als ein keramischer Kondensator und der andere Kondensator als ein Elektrolytkondensator (ELKO) ausgestaltet. Die beiden Kondensatoren dienen zum Glätten der Hochfrequenz und als Puffer zum Ausgleichen möglicher Stromschwankungen.

Das zum Aufbau der Spulen und Übertrager verwendete Drahtmaterial muss HF-tauglich (d.h. tauglich für eine Hochfrequenz) sein. Hierzu sind entsprechend geeignete Litzen oder andere geeignete Materialien mit einem adäquaten Verhalten und Verwendungszweck auszuwählen.

Wie in den Figuren angedeutet, enthält die erste Spule 5 einen Ferrit-Kern 18 bestehend aus Nickel-Zink (NiZn) mit einem spezifischen Widerstand von 10⁵ bis 10⁶ Ωm sowie einer magnetischen Permeabilität von 125. Es ist jedoch auch gemäß weiterer Ausführungsformen möglich, dass die magnetische Permeabilität zwischen 50 und 500 bzw. insbesondere zwischen 80 und 200 liegt.

Gemäß einer vorteilhaften Ausführungsform kann der Ferrit-Kern 18 der ersten Spule 5 wenigstens teilweise oder auch vollständig das Material 4F1 enthalten. Durch die Verwendung des Materials 4F1 weist der Ferrit-Kern 18 der ersten Spule 5 bei 25 °C eine anfängliche magnetische Permeabilität (µᵢ) von 80 H/m, eine maximale magnetische Flussdichte (Bₛₐₜ) von ungefähr 320 mT, eine Curie-Temperatur (T_{C}) von wenigstens 260 °C, einen elektrischen Widerstand (p) von ungefähr 10⁵ Ωm auf. Der Ferrit-Kern 18 der ersten Spule 5 besteht dabei aus einer Nickel-Zink-Legierung (NiZn).

Wie in den Figuren angedeutet, enthält auch die zweite Spule 8 einen Ferrit-Kern 20 bestehend aus Nickel-Zink (NiZn) ebenfalls mit einem spezifischen Widerstand von 10⁵ bis 10⁶ Ωm sowie einer magnetischen Permeabilität von 125.

Gemäß einer vorteilhaften Ausführungsform kann der Ferrit-Kern 18 der ersten Spule 5 wenigstens teilweise oder auch vollständig das Material 4F1 enthalten. Durch die Verwendung des Materials 4F1 weist der Ferrit-Kern 18 der ersten Spule 5 bei 25 °C eine anfängliche magnetische Permeabilität (µᵢ) von 125 H/m, eine maximale magnetische Flussdichte (Bₛₐₜ) von weniger als 0,1 mT, eine Curie-Temperatur (Tc) von wenigstens 350 °C, einen elektrischen Widerstand (p) von ungefähr 10⁵ Ωm auf. Der Ferrit-Kern 18 der ersten Spule 5 besteht dabei aus einer Nickel-Zink-Legierung (NiZn).

Der Ferrit-Kern 18 der ersten Spule 5 und der Ferrit-Kern 20 der zweiten Spule 8 ist U-förmig ausgestaltet und weist eine Querschnittsfläche von 5,65 cm² auf, sodass während der Übertragung der elektrischen Energie eine Leistungsdichte von 35 W/cm² bei einer Eingangsleistung von 200 W erreicht wird.

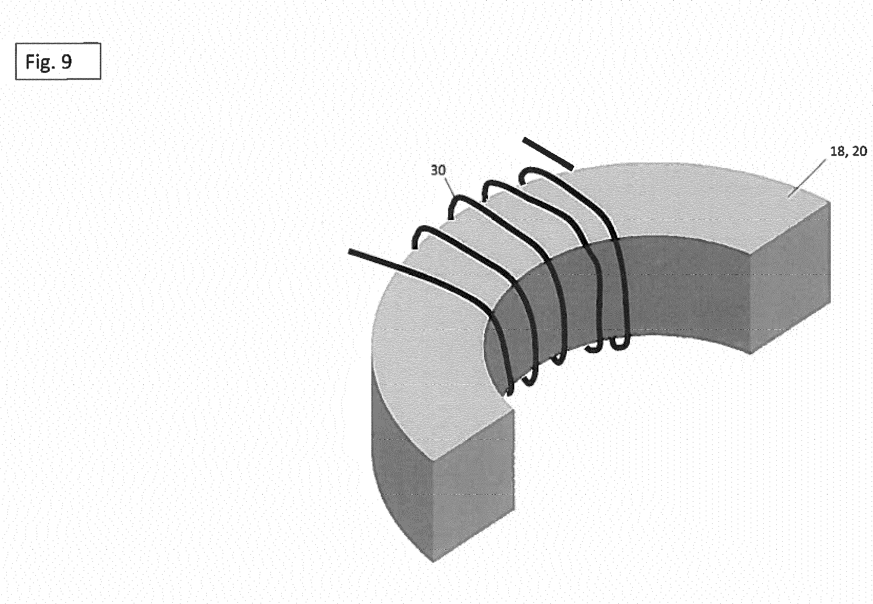

Wie in den Figuren 9 bis 15 dargestellt, kann der Ferrit-Kern 18 der ersten Spule 5 und der Ferrit-Kern 20 der zweiten Spule 8 in verschiedenen Formen ausgestaltet sein. Der Ferrit-Kern 18 der ersten Spule 5 und der Ferrit-Kern 20 der zweiten Spule 8 sind dabei stets so in der erfindungsgemäßen Vorrichtung 1 zueinander angeordnet, dass die Feldabstrahlung des jeweiligen Ferrit-Kerns 18, 20 zueinander gerichtet ist.

In Figur 9 ist dabei der Ferritkern 18, 20 der ersten und/oder zweiten Spule 5, 8 gemäß einer ersten Ausgestaltungsform in einer U-Form ausgestaltet. Ein Draht 30 für die Wicklung einer Spule ist um den jeweiligen Ferrit-Kern 18, 20 gewickelt.

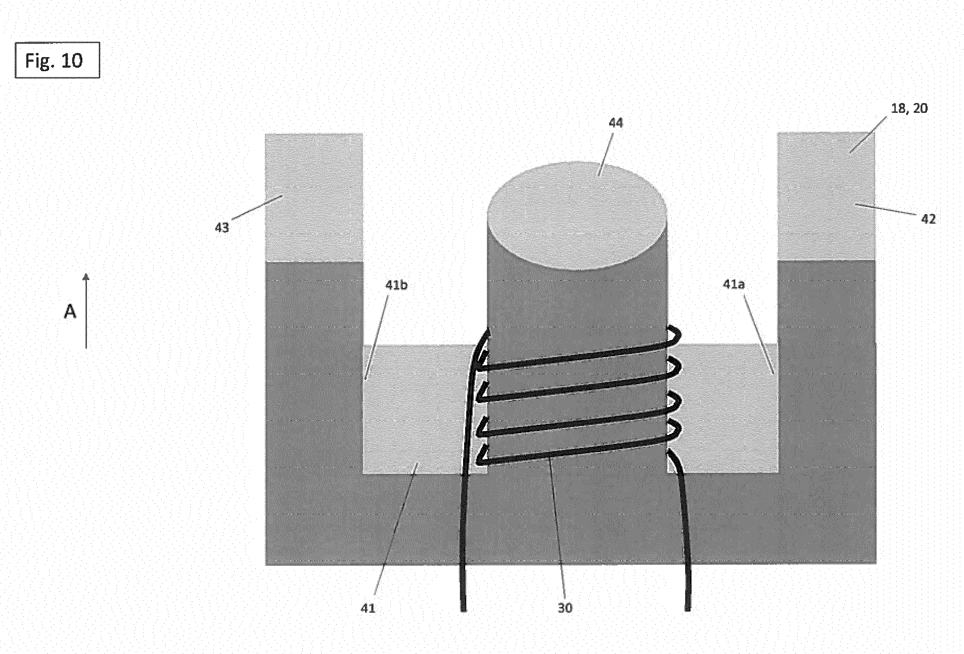

In Figur 10 ist der Ferritkern 18, 20 gemäß einer zweiten Ausgestaltungsform gezeigt. Der Ferritkern 18, 20 gemäß der zweiten Ausgestaltungsform enthält dabei im Wesentlichen einen Grundsteg 41, von dem sich an den jeweiligen Enden 41a, 41b des Grundstegs 41 ein erster und zweiter Steg 42, 43 senkrecht zum Grundsteg 41 erstrecken. Zwischen dem ersten und zweiten Steg 42, 43 erstreckt sich weiterhin ein dritter Steg 44 senkrecht zum Grundsteg 41. Der erste, zweite und dritte Steg 42, 43, 44 erstrecken sich in dieselbe Richtung A. Der dritte Steg 44 weist einen runden Querschnitt auf. Der zweite und dritte Steg 42, 43 weisen einen rechteckigen Querschnitt auf.

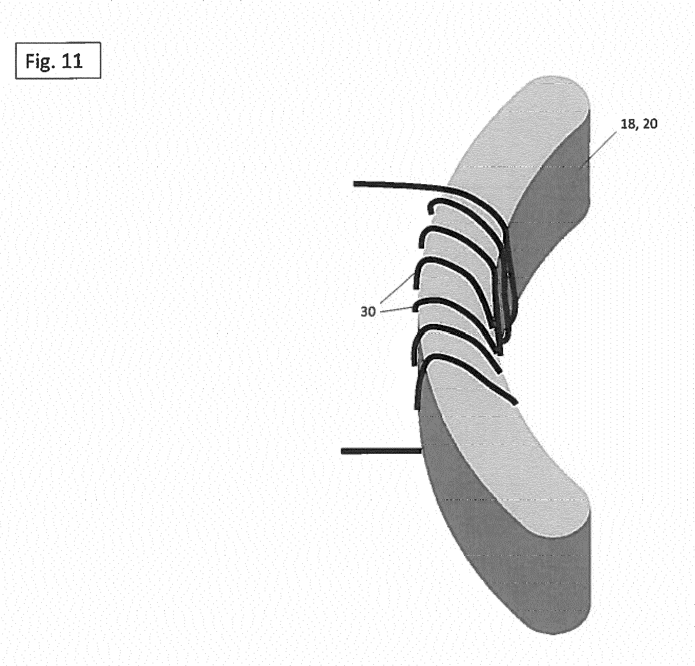

In Figur 11 ist der Ferritkern 18, 20 gemäß einer dritten Ausgestaltungsform gezeigt. Der Ferritkern 18, 20 gemäß der dritten Ausgestaltungsform weist eine gebogene Form und ist dabei im Wesentlichen gerader ausgestaltet als in der ersten Ausgestaltungsform.

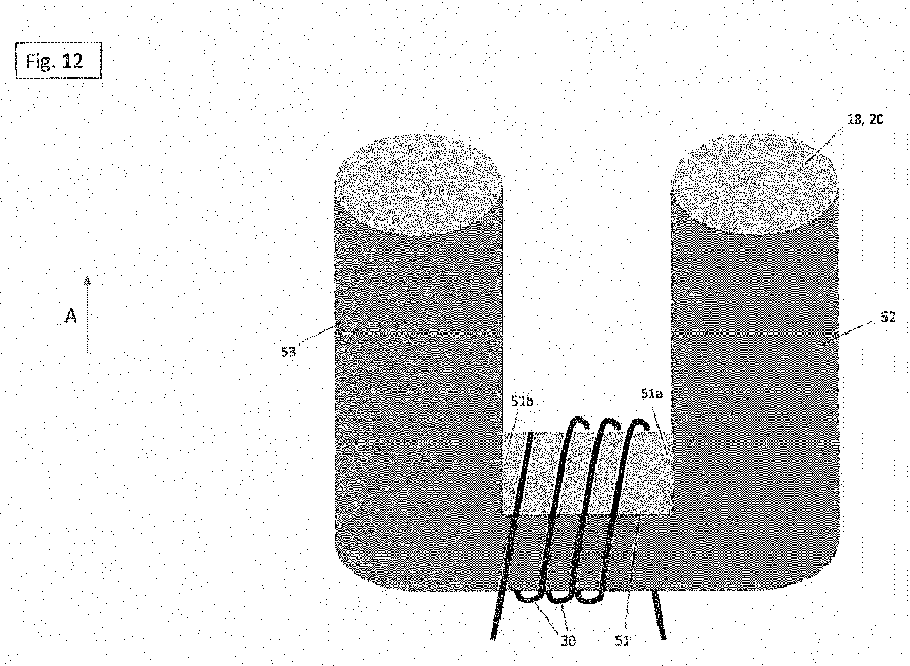

In Figur 12 ist der Ferritkern 18, 20 gemäß einer vierten Ausgestaltungsform gezeigt. Der Ferritkern 18, 20 gemäß der vierten Ausgestaltungsform enthält dabei im Wesentlichen einen Grundsteg 51, von dem sich an den jeweiligen Enden 51a, 51b des Grundstegs 51 ein erster Steg 52 und zweiter Steg 53 senkrecht zum Grundsteg 51 in Richtung A erstrecken. Der erste und zweite Steg 52, 53 weisen einen kreisrunden Querschnitt auf.

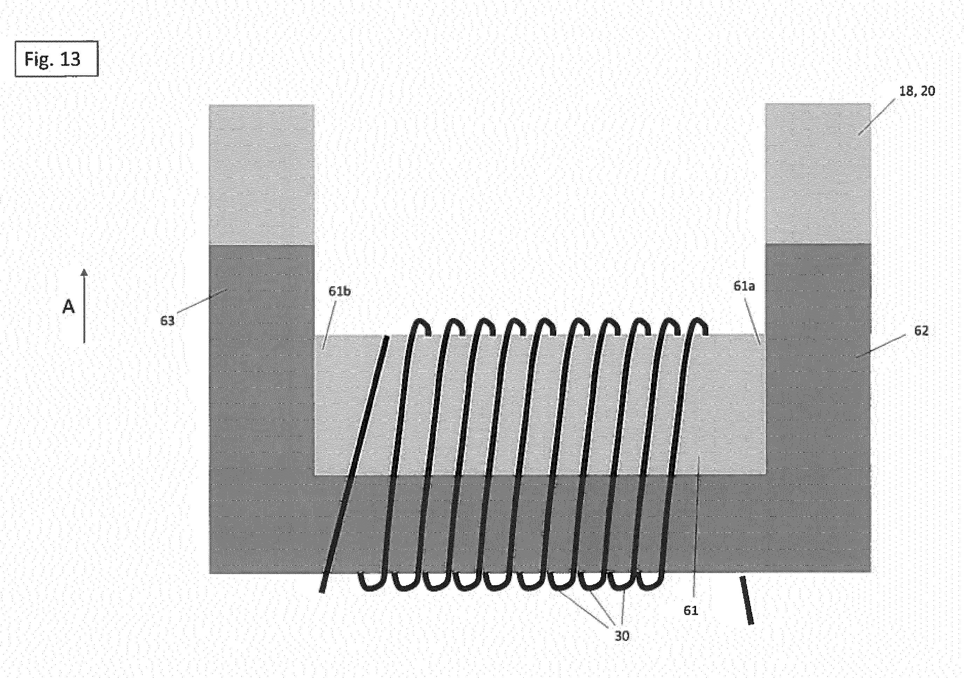

Figur 13 zeigt den Ferritkern 18, 20 gemäß einer fünften Ausgestaltungsform. Der Ferritkern 18, 20 gemäß der fünften Ausgestaltungsform enthält dabei im Wesentlichen einen Grundsteg 61, von dem sich an den jeweiligen Enden 61a, 61b des Grundstegs 61 ein erster Steg 62 und zweiter Steg 63 senkrecht zum Grundsteg 61 in Richtung A erstrecken. Der erste und zweite Steg 62, 63 weisen einen rechteckigen Querschnitt auf.

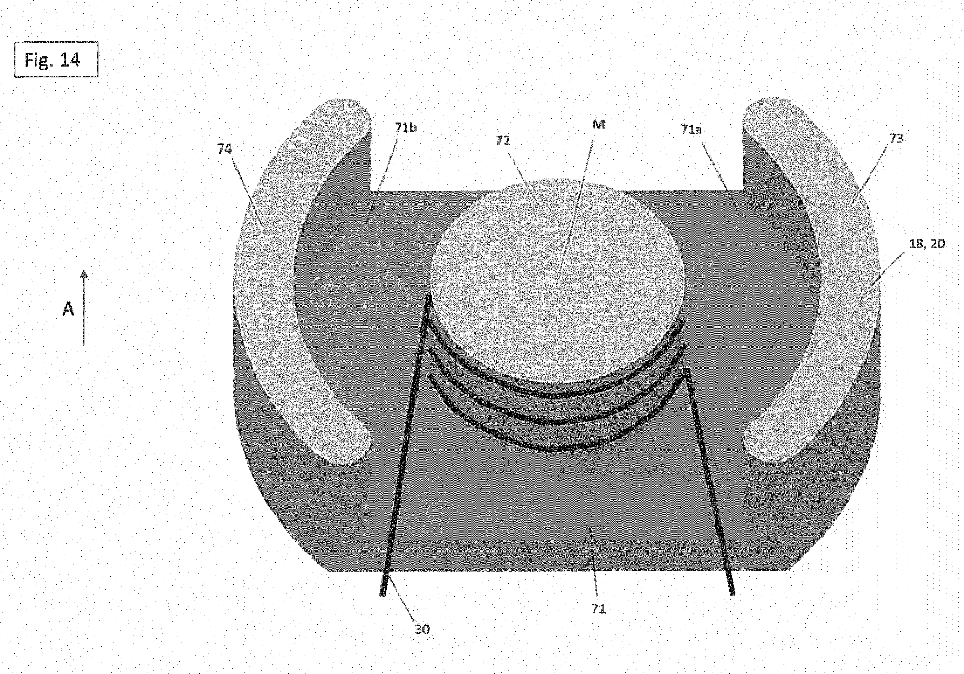

In Figur 14 ist der Ferritkern 18, 20 gemäß einer sechsten Ausgestaltungsform gezeigt. Der Ferritkern 18, 20 gemäß der sechsten Ausgestaltungsform enthält dabei eine Grundplatte 71 mit einer zylindrischen Erhebung 72 in der Mitte M. An einem ersten Ende 71a der Grundplatte 71 ist eine erste bogenförmige Erhebung 73 und an einem zweiten Ende 71b der Grundplatte 71 ist eine zweite bogenförmige Erhebung 74 positioniert. Die erste und zweite Erhebung 73, 74 ist dabei so auf der Grundplatte 71 angeordnet, dass die jeweils konkaven Flächen der beiden bogenförmigen Erhebungen 73, 74 zueinander gerichtet sind. Zwischen den beiden bogenförmigen Erhebungen 73, 74 ist die zylindrische Erhebung auf der Grundplatte 71 positioniert. Alle drei Erhebungen 72, 73, 74 erstrecken sich in dieselbe Richtung A von der Grundplatte 71. Wie in Figur 14 ersichtlich ist der Draht 30 für die Wicklung einer Spule gemäß einer ersten Wicklungsanordnung um die zylindrische Erhebung in der Mitte M gewickelt.

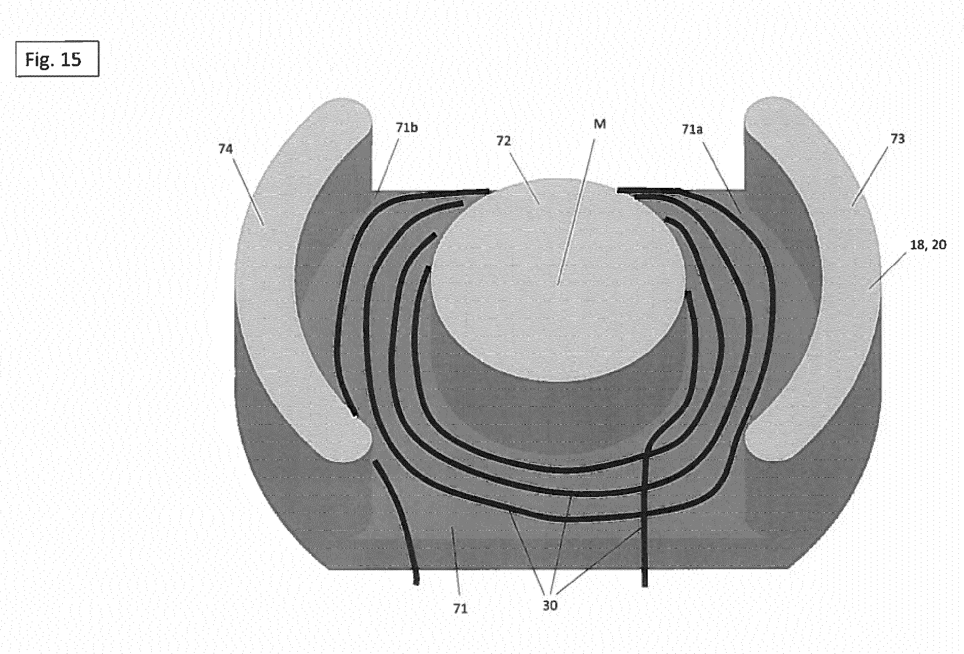

In Figur 15 ist der Ferrit-Kern 18, 20 gemäß der sechsten Ausgestaltungsform dargestellt. Der Draht 30 für die Wicklung einer Spule ist gemäß einer zweiten Wicklungsanordnung auf der Grundplatte 71 spiralförmig angeordnet.

Generell ist es möglich, dass unterschiedliche Wicklungsanordnungen um bzw. an den Ferrit-Kernen 18, 20 möglich sind. Es ist dabei möglich, dass der Draht 30 für die Wicklung einer Spule in lediglich einer Ebene oder aber auch in mehreren Ebenen, d.h. mehrere Lagen Draht 30 übereinander, angeordnet sind. Auch eine einlagige Anordnung der Wicklungen, unterteilt in mehreren Gruppen ist dabei möglich, um beispielsweise parasitäre Wicklungskapazitäten zu reduzieren.

Wie den Figuren 1 bis 8 zu entnehmen ist, erstreckt sich zwischen der ersten Spule 5 der Sendereinrichtung 2 und der zweiten Spule 8 der Empfängereinrichtung 3 eine Distanz D. Die Distanz D beträgt ungefähr 40 mm.

Ein Leistungsverstärker 80 an der Sendereinrichtung 2 dient hierbei als Taktgeber für die Frequenz des resonanten Schwingkreises an der Sendereinrichtung 2. Der Leistungsverstärker ist dafür mit einer Wechselspannungsquelle verbunden. Die Wechselspannungsquelle, die auch als Stromquelle oder Spannungsquelle bezeichnet werden kann, ist in den Figuren nicht dargestellt und nur mit P_{IN} angedeutet. Der Leistungsverstärker 80 kann dabei je nach Anwendungsfall so ausgestaltet, dass zusammen mit der Wechselspannungsquelle entweder eine niederimpedante oder hochimpedante Energieressource an der Sendereinrichtung 2 für den resonanten Schwingkreis an der Sendereinrichtung 2 erzeugt wird.

Zur Übertragung einer elektrischen Energie von der Sendereinrichtung 2 zu der Empfängereinrichtung 3 wird dann elektrische Energie in Form von Wechselstrom von der Wechselspannungsquelle P_{IN} über den Leistungsverstärker 80 mit einer Frequenz von 6,78 MHz in die erste Spule 5 geleitet. Die erste Spule 5 und der erste Kondensator 6 erzeugen einen resonanten Schwingkreis mit einer Induktivität von 1,58 µH und einer elektrischen Kapazität von 349 x 10⁻¹² F.

Dadurch, dass der resonante Schwingkreis in der Sendereinrichtung 2 hochresonant ist, verringert sich die in diesem Schwingkreis befindliche elektrische Energie nur relativ langsam über eine hohe Anzahl an Zyklen. Durch die erfindungsgemäße Anordnung der Sendereinrichtung 2 zu der Empfängereinrichtung 3 kann ein relativ großer Teil der elektrischen Energie von dem resonanten Schwingkreis an der Sendereinrichtung 2 auf den resonanten Schwingkreis an der Empfängereinrichtung 3 übertragen werden.

Durch die spezielle Ausgestaltung der ersten Spule 5 der Sendereinrichtung 2 und der zweiten Spule 8 der Empfängereinrichtung 3 kommt es zu einer induktiven Kopplung. Bei den gekoppelten elektrischen Feldern der bei den beiden Spulen 5, 8 handelt es sich um sogenannte nicht-strahlende Nahfelder, welche auch als evaneszente Wellen bezeichnet werden können.

Da die Distanz zwischen den beiden Spulen 5, 8 so gewählt ist, dass diese innerhalb des Abstands von ¼ Wellenlängen liegt, wird ein Großteil der elektrischen Energie, d.h. mit nur geringen Verlusten, von der ersten Spule 5 der Sendereinrichtung 2 zu der zweiten Spule 8 der Empfängereinrichtung 3 gesendet.

Durch ein entsprechend gewähltes Verhältnis der Windungen N₁, N₂ an dem Übertrager 15 kann außer einer Anpassung der Impedanz zusätzlich auch eine geeignete Größe der elektrischen Spannung eingestellt werden, sodass der Verbraucher entsprechend mit elektrischer Spannung versorgt werden kann. Ein typischer Ausgangsspannungsbereich liegt zwischen 3 V_{DC} (Gleichspannung) und 500 V_{DC} (Gleichspannung).

## Patentansprüche

1. Vorrichtung (1) zum Senden von elektrischer Energie an wenigstens einen elektrischen Verbraucher, beispielsweise einen Akkumulator, enthaltend
- wenigstens eine Sendereinrichtung (2) zum Senden einer elektrischen Energie mit wenigstens einer ersten Spule (5) und wenigstens einem ersten Kondensator (6) zum Erzeugen eines resonanten Schwingkreises an der Sendereinrichtung (2);
- wenigstens eine Empfängereinrichtung (3) zum Empfangen der von der Sendereinrichtung (2) gesendeten Energie mit wenigstens einer zweiten Spule (8) und wenigstens einem zweiten Kondensator (9) zum Erzeugen eines resonanten Schwingkreises an der Empfängereinrichtung (3), wobei die Empfängereinrichtung (3) mit dem Verbraucher (4) zur Bildung einer elektrischen Verbindung verbindbar ist;
- einen Leistungsverstärker (80);
- einen Übertrager (15) zum Anpassen der Impedanz zwischen dem resonanten Schwingkreis an der Empfängereinrichtung (3) und dem Verbraucher (4); sowie
- eine elektrische Energiequelle (P_{IN}), insbesondere eine Wechselspannungsquelle, zur Versorgung des resonanten Schwingkreises an der Sendereinrichtung (2) mit elektrischer Energie;
**dadurch gekennzeichnet, dass** die Sendereinrichtung (2) und Empfängereinrichtung (3) gemeinsam einen serienresonanten Schwingkreis bilden zur Übertragung der elektrischen Energie von der Sendereinrichtung (2) zu der Empfängereinrichtung (3), sodass bei der Empfängereinrichtung (3) die von der Sendereinrichtung (2) zur Verfügung gestellte elektrische Energie dem Verbraucher (4) zugeführt werden kann.

2. Vorrichtung (1) nach Anspruch 1,
**dadurch gekennzeichnet, dass** die erste Spule (5) und der erste Kondensator (6) der Sendereinrichtung (2) parallel zueinander geschaltet sind zur Erzeugung eines parallelresonanten Schwingkreises an der Sendereinrichtung (2).

3. Vorrichtung (1) nach Anspruch 1 oder 2,
**dadurch gekennzeichnet, dass** die zweite Spule (8) und der zweite Kondensator (9) der Empfängereinrichtung (3) parallel zueinander geschaltet sind zur Erzeugung eines parallelresonanten Schwingkreises an der Empfängereinrichtung (3).

4. Vorrichtung (1) nach wenigstens einem der Ansprüche 1 bis 3,
**dadurch gekennzeichnet, dass** die erste Spule (5) einen Ferrit-Kern (18) enthält, der wenigstens teilweise aus dem Material 4F1 besteht.

5. Vorrichtung (1) nach wenigstens einem der Ansprüche 1 bis 3,
**dadurch gekennzeichnet, dass** die zweite Spule (8) einen Ferrit-Kern (20) enthält, der wenigstens teilweise aus dem Material 4C65 besteht.

6. Vorrichtung (1) nach wenigstens einem der Ansprüche 1 bis 3,
**dadurch gekennzeichnet, dass** sowohl die erste als auch die zweite Spule (5, 8) einen Ferrit-Kern (18, 20) enthält, welcher einen spezifischen Widerstand von 10⁵ bis 10⁶ Ωm sowie eine magnetische Permeabilität von 50 bis 500, insbesondere 125 hat.

7. Vorrichtung (1) nach Anspruch 6,
**dadurch gekennzeichnet, dass** der Ferrit-Kern (18, 20) wenigstens teilweise Nickel-Zink-Legierung (NiZn) enthält.

8. Vorrichtung (1) nach Anspruch 6 oder 7,
**dadurch gekennzeichnet, dass** der Ferrit-Kern (18, 20) U-förmig ausgestaltet ist und eine aktive Querschnittsfläche von 2 bis 10 cm², insbesondere von 5,65 cm², aufweist, sodass während der Übertragung der elektrischen Energie von der Sendereinrichtung (2) zu der Empfängereinrichtung (3) eine Leistungsdichte von 10 bis 100 W/cm², insbesondere 35 W/cm², bei einer Eingangsleistung von 3 bis 1000W, insbesondere 200W, erreichbar ist.

9. Vorrichtung (1) nach wenigstens einem der Ansprüche 1 bis 8,
**dadurch gekennzeichnet, dass** die Frequenz des resonanten Schwingkreises an der Sendereinrichtung (2) zwischen 2 und 30 MHz, insbesondere zwischen 6,765 und 6,795 MHz, beispielsweise bei 6,78 MHz, liegt.

10. Vorrichtung (1) nach wenigstens einem der Ansprüche 1 bis 9,
**dadurch gekennzeichnet, dass** in der Sendereinrichtung (2) und/oder in der Empfängereinrichtung (3) ein variabler Kondensator (7, 10), beispielsweise ein Trimmerkondensator, zur Abstimmung der Resonanzfrequenz enthalten ist.
